Europäisches Patentamt

European Patent Office

Office européen des brevets

(11) Veröffentlichungsnummer: **0 291 850**
**A1**

(12) **EUROPÄISCHE PATENTANMELDUNG**

(21) Anmeldenummer: 88107590.7

(22) Anmeldetag: 11.05.88

(51) Int. Cl.⁴: **C08G 18/10 , C08G 18/08 ,**
**C08G 18/32 , C09D 3/72 ,**
**B05D 1/02**

(30) Priorität: 16.05.87 DE 3716479

(43) Veröffentlichungstag der Anmeldung:
23.11.88 Patentblatt 88/47

(84) Benannte Vertragsstaaten:
AT BE CH DE ES FR GB IT LI NL SE

(71) Anmelder: **Elastogran GmbH**
**Postfach 1140**
**D-2844 Lemförde(DE)**

(72) Erfinder: **Liebl, Herbert**
**Palsweiser Strasse 7**
**D-8037 Olching/Neu-Esting(DE)**
Erfinder: **Roche, Peter,**
**Daglfinger Strasse 22/0**
**D-8000 München 81(DE)**
Erfinder: **Rank, Matthaeus**
**Dahlienweg 3**
**D-8037 Olching/Neu-Esting(DE)**

(74) Vertreter: **Wurzler, Hartmut, Dr. et al**
**i.Fa. BASF Aktiengesellschaft**
**Carl-Bosch-Strasse 38**
**D-6700 Ludwigshafen(DE)**

(54) Verfahren zur Herstellung von Überzügen aus Polyurethan-Ein-komponenten-Systemen und Wasserdampf.

(57) Die vorliegende Erfindung betrifft ein Verfahren zur Herstellung von Überzügen durch Umsetzung von Polyurethan-Einkomponenten-Systemen, die vorzugsweise mindestens ein NCO-Gruppen gebunden enthaltendes Prepolymeres und einen latenten Härter enthalten, mit Wasser, wobei das Polyurethan-Einkomponenten-System mit Wasserdampf, der zweckmäßigerweise eine Temperatur von 100 bis 500°C besitzt und mit einem Druck von 0,5 bis 10 bar zugeführt wird, gemischt und nach der Spritzmethode versprüht wird.

EP 0 291 850 A1

## Verfahren zur Herstellung von Überzügen aus Polyurethan-Einkomponenten-Systemen und Wasserdampf

Zweikomponenten-Polyurethan(PU)-Systeme werden in großem Maßstabe als Überzugsmittel und für die Herstellung von elastischen Belägen verwendet. Es sind ferner Verfahren bekannt, bei denen die innere Oberfläche von Formwerkzeugen mit Zweikomponenten-PU-Systemen besprüht werden. Nach Angaben der EP-A- 0 189 845 (US 4 649 162) können zellige oder kompakte Kunststoffe, z.B. Überzüge, aus mindestens zwei miteinander reagierenden Ausgangsstoffen, beispielsweise organischen Polyisocyanaten, höhermolekularen Polyhydroxylverbindungen und gegebenenfalls niedermolekularen Kettenverlängerungsmitteln, hergestellt werden, indem man die Ausgangsstoffe getrennt einer Mischzone zuführt, dort miteinander vermischt, anschließend austrägt und auf 100 bis 1200°C erwärmte Luft mit dem aus der Mischzone austretenden Komponentengemisch zusammenführt. Unter diesen Reaktionsbedingungen kann z.B. eine Reaktionsmischung zur Herstellung von PU-Überzügen gleichmäßig vernebelt und in einem gezielt gebündelten Strahl auf ein Substrat aufgetragen werden. Durch die zunächst in der Mischzone sehr langsame, nach Zuführung der erhitzten Luft beschleunigte Bildung der Polyurethane erfolgt ein rascher Viskositätsanstieg, der ein Verlaufen begüunstigt, jedoch ein Ablaufen an senkrechten Flächen sowie eine Tropfnasenbildung verhindert.

Da bei Zweikomponenten-PU-Systemen mit teueren, komplizierten Dosier- und Mischaggregaten unter zum Teil schwierigen Bedingungen gearbeitet werden muß, bestand schon lange die Absicht, diese durch leichter handhabbare Polyurethan-Einkomponenten-Systeme zu ersetzen.

Größere Bedeutung haben als PU-Einkomponenten-Systeme NCO-Gruppen gebunden enthaltende Prepolymere, vorzugsweise auf der Grundlage von höhermolekularen Polyhydroxylverbindungen und organischen Polyisocyanaten, wie z.B. Hexamethylen-, Toluylen- und Diphenylmethan-diisocyanaten, erlangt, die durch Kontakt mit Luftfeuchtigkeit von der Oberfläche her zu harnstoffgruppenhaltigen Polyurethanen aushärten. Bei Vorliegen hoher Feuchtigkeitskonzentrationen und dickeren PU-Schichten muß der Härtungsvorgang zur Vermeidung einer Blasenbildung so eingestellt werden, daß das gebildete Kohlendioxid zuvor entweichen kann.

Durch den Zusatz von latenten Härtern zu NCO-Gruppen gebunden enthaltenden Prepolymeren werden Einkomponenten-PU-Systeme erhalten, die ohne Entwicklung von Kohlendioxid aushärten. Latente Härter sind blockierte Reaktionspartner für organische Polyisocyanate, die durch Einwirkung von Feuchtig keit in reaktionsfähige Verbindungen übergeführt werden. Als latente Härter Verwendung finden beispielsweise Oxazolidine, Enamine oder Azomethine, wie z.B. Ketimine und Aldimine. PU-Einkomponenten-Systeme, die NCO-Gruppen enthaltende Prepolymere und latente Härter enthalten, lassen sich unabhängig vom Feuchtigkeitsgehalt der Umgebung, ja sogar unter Wasser, blasenfrei aushärten. Die Außenverarbeitung derartiger PU-Einkomponenten-Systeme ist somit im wesentlichen witterungsunabhängig.

Geschwindigkeitsbestimmend für die Durchhärtung von PU-Einkomponenten-Systemen ist die Diffusionsgeschwindigkeit von Wasser in die auszuhärtende PU-Masse, so daß die bei höheren PU-Schichtstärken die Durchhärtung nur langsam voranschreitet. Aus diesem Grunde lassen sich an senkrechten Flächen Überzüge mit größeren Schichtstärken nur schwerlich aufbringen, ohne daß die Beschichtungsmasse abläuft.

Die Aufgabe der vorliegenden Erfindung bestand darin, PU-Einkomponenten-Systeme schnell und zuverlässig zu Überzügen, auch mit Schichtdicken von 5 mm und größer zu verarbeiten, ohne daß die Polyurethanmasse vor Einsetzen der Härtung, speziell an senkrechten Flächen, Hinterschnitten oder scharfen Kanten, abfließt oder sich unerwünschte "Tropfnasen" bilden.

Diese Aufgabe konnte überraschenderweise durch die Verwendung von Wasserdampf als Reaktionskomponente und Druckgas zur Zerstäubung des PU-Einkomponenten-Systems gelöst werden.

Gegenstand der Erfindung ist somit ein Verfahren zur Herstellung von Überzügen durch Umsetzung von Polyurethan-Einkomponenten-Systemen und Wasser, das dadurch gekennzeichnet ist, daß man mindestens ein Polyurethan-Einkomponenten-System mit Wasserdampf mischt und versprüht.

Der Wasserdampf wird üblicherweise unter einem Druck von 0,5 bis 10 bar, vorzugsweise 2 bis 5 bar und insbesondere 2,5 bis 3,2 bar zugeführt und besitzt eine Temperatur von 100°C bis 500°C, vorzugsweise von 100 bis 250°C und insbesondere 120 bis 150°C.

Besonders bewährt hat sich und daher insbesondere Verwendung findet Wasserdampf mit einer Temperatur von 100 bis 250°C, der unter einem Druck von 2,0 bis 5,0 bar dem Verdüsungsaggregat, beispielsweise einer Spritzpistole, zugeführt wird.

Zum Versprühen der PU-Einkomponenten-Systeme stehen im wesentlichen zwei Verfahren zur Verfügung.

Nach einem modifizierten "Airless"-Verfahren werden das PU-Einkomponenten- System sowie gegebenenfalls Katalysatoren, Hilfsmittel und/oder Zusatzstoffe und der Wasserdampf im Hochdruck-Verfahren im Gegenstrom oder mittels eines statischen Mischrohrs vermischt und über Düsen unter hohem Druck zerstäubt.

Bei der sogenannten Luftverdüsung werden das PU-Einkomponenten-System sowie gegebenenfalls Katalysatoren, Hilfsmittel und/oder Zusatzstoffe im Niederdruck-Verfahren in statischen Mischrohren oder mit mechanischen Rührern in einer Mischkammer vermischt. Beim Austrag aus der Düse wird das Komponentengemisch nach dem erfindungsgemäßen Verfahren mit Wasserdampf versetzt und dadurch zerstäubt.

Zur Herstellung der Überzüge nach dem erfindungsgemäßen Verfahren hat sich insbesondere ein Verdüsungsaggregat bewährt nach Art der herkömmlichen Druckluftspritzpistolen, wobei die zum Betrieb erforderliche Druckluft durch Wasserdampf ersetzt wird. Als besonders vorteilhaft erweist sich dabei eine Konstruktion der Spritzpistole, bei der durch Anordnung eines konzentrischen Ringspalts um die Zerstäubungsdüse eine Dampfglocke erzeugt wird, die den Sprühstrahl nach außen hin abschließt. Durch diese Maßnahme wird der Sprühstrahl besonders feinteilig und eine Vernebelung der Umgebung weitgehend vermieden. Zum anderen erfolgt durch die Wärmezufuhr mit dem erhitzten Wasserdampf ein sofortiger Start der Polyadditionsreaktion und gegebenenfalls ein Verdunsten eines eventuell mitverwendeten Lösungsund Verdünnungsmittels. Durch die rasche Reaktion und die damit verbundene Viskositätszunahme wird erreicht, daß das verdüste PU-Einkomponenten-System beim Auftreten auf die zu besprühende Fläche bereits soweit anreagiert, daß auch bei der Ausbildung dickerer Schichten z.B. von 0,03 bis 5 mm und mehr, kein Ablaufen der Polyurethanmasse mehr erfolgt und andere nachteilige Erscheinungsbilder z.B. die Tropfnasenbildung, nicht auftreten.

Die Spritzfläche wird zweckmäßigerweise aus einer Entfernung von 0,1 bis 1,2 m, vorzugsweise von 0,3 bis 0,5 m und unter einem Spritzwinkel von 10 bis 90 Grad, vorzugsweise von 60 bis 90 Grad, besprüht. Die Austragsleistung ist abhängig von der Art des verwendeten Verdüsungsaggregats und beträgt üblicherweise 50 bis 2000 g/Minute, vorzugsweise 150 bis 1000 g/Minute PU-Einkomponenten-System. Hierbei werden pro kg PU-Einkomponenten-System durchschnittlich 0.01 gis 1,0 kg, vorzugsweise 0,05 bis 0,4 kg Wasserdampf verbraucht.

Als PU-Einkomponenten-Systeme zur Bildung der Überzüge finden die hierfür an sich bekannten Polyurethan-Prepolymeren mit NCO-Gehalten von 1 bis 20 Gew.%, vorzugsweise 1 bis 10 Gew.% und insbesondere 2,5 bis 6 Gew.% Verwendung. Die Produkte werden hergestellt durch Umsetzung von über schüssigen Mengen an organischen Polyisocyanaten, vorzugsweise aliphatischen, cycloaliphatischen und insbesonderen aromatischen Diisocyanaten mit höhermolekularen Polyolen oder Mischungen aus höhermolekularen Polyolen ermolekularen Kettenverlängerungsmitteln und/oder Vernetzungsmitteln. Die Isocyanatgruppen aufweisenden Prepolymere sind vorzugsweise frei von monomeren Polyisocyanaten. Geeignet sind jedoch auch PU-Prepolymere, die gegebenenfalls untergeordnete Mengen, beispielsweise 0 bis 5 Gew.%, vorzugsweise 0 bis 2 Gew.%, monomere organische Polyisocyanate enthalten.

Als PU-Einkomponenten-Systeme besonders bewährt haben sich jedoch und daher vorzugsweise Verwendung finden Formulierungen, die neben den obengenannten PU-Prepolymeren zusätzlich latente Härter, zweckmäßigerweise aus der Gruppe der Oxazolidine, Enamine und Azomethine, vorzugsweise Ketimine und/oder insbesondere Aldimine sowie gegebenenfalls organische Carbonsäuren, wie z.B. aromatische und/oder aliphatische Carbonsäuren oder Arylsulfonsäuren als Katalysator und gegebenenfalls Hilfsmittel und/oder Zusatzstoffe enthalten.

Insbesondere Anwendung finden PU-Einkomponenten-Systeme, deren PU-Prepolymere einen NCO-Gehalt von 1 bis 10 Gew.% besitzen und die hergestellt werden durch Umsetzung von organischen, vorzugsweise aliphatischen, cycloaliphatischen und/oder aromatischen Polyisocyanaten und höhermolekularen Polyolen, vorzugsweise di- und/oder trifunktionellen Polyester- und/oder Polyether-polyolen mit Molekulargewichten von 500 bis 8000 und als latenten Härter mindestens ein Ketimin und/oder vorzugsweise Aldimin in einer solchen Menge enthalten, daß pro NCO-Gruppe des PU-Prepolymeren 0,2 bis 1,3, vorzugsweise 0,5 bis 0,9 Äquivalente $-N=C\langle$ und/oder $-N=CH$-Gruppen vorliegen.

Zur Herstellung der PU-Einkomponenten-Systeme eignen sich beispielsweise die folgenden Ausgangskomponenten:

Als organische Polyisocyanate werden vorzugsweise aliphatische, cycloaliphatische und/oder insbesondere aromatische Diisocyanate verwendet. Im einzelnen seien beispielhaft genannt: aliphatische Diisocyanate, wie Ethylen-, 1,4-Tetramethylen-, 1,6-Hexamethylen- und 1,12-Dodecan-diisocyanat, cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan, (IPDI) 2,4-und 2,6-Hexahydrotoluylen-diisocyanat sowie beliebige Gemische dieser Isomeren, 4,4'- und 2,4'-Diisocyanato-dicyclohexylmethan und aromatische Diisocyanate, wie 1,5-Diisocyanato-naphthalin, Diisocyanato-benzole, 2,4-und 2,6-Diisocyanato-toluol und die entsprechenden Isomerengemische, 4,4'-, 2,4'- und 2,2'-Diphenyl methan-diisocyanat und die entsprechenden Isomerengemische, Polyphenylpolymethylen-polyisocyanate, Mischungen aus Diphenylmethan-diisocyanaten und Polyphenyl-polymethylen-polyisocyanaten und/oder Diisocyanato-toluolisomeren. Die genannten Di- und Polyisocyanate können einzeln oder in Form von Mischungen eingesetzt werden. Vorzugsweise Anwendung finden IPDI, 4,4'-Diisocyanato-dicyclohexylmethan, 1,6-Hexamethylen-diisocyanat, 2,4'-und/oder 4,4'-Diphenylmethan-diisocyanat oder Mischungen aus 2,4'-und/oder 4,4'-Diphenylmethan-diisocyanat und 0 bis 30 Gew.%, vorzugsweise 0 bis 10 Gew.% Polyphenyl-polymethylen-polyisocyanaten, wobei die Gew.% bezogen sind auf das Gesamtgewicht der Mischung.

Als Reaktionspartner für die organischen Polyisocyanate zur Herstellung der Polyurethan-Prepolymeren kommen Polyole, zweckmäßigerweise solche mit einer Funktionalität von 2 bis 3, vorzugsweise von 2 und einem Molekulargewicht von 500 bis 8000, vorzugsweise von 1000 bis 6000 in Betracht. Bewährt haben sich z.B. Polyether-polyole, Polyester-polyole, Polythioetherpolyole, Polyesteramide, hydroxylgruppenhaltige Polyacetale, hydroxylgruppenhaltige aliphatische Polycarbonate und hydroxylgruppenhaltige Polybutadien-telechele oder Mischungen aus mindestens zwei der genannten Polyole. Vorzugsweise Anwendung finden Polyester-polyole und/ oder Polyether-polyole.

Geeignete Polyester-polyole können beispielsweise aus organischen Dicarbonsäuren mit 2 bis Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure und Fumarsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispeilsweise 20-35:35-50:20-32 Gew.-Teilen, und insbesondere Adipinsäure. Beispiele für mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol und Polyoxytetramethylen-glykole mit Molekulargewichten von 300 bis 800 oder Mischungen aus mindestens zwei der genannten Diole, insbesondere Mischungen aus 1,4-Butandiol, 1,5-Pentandiol und 1,6-Hexandiol. Eingesetzt werden können ferner Polyester polyole aus Lactonen, z.B. ε-Caprolacton, oder Hydroxycarbonsäuren, z.B. ω-Hydroxycapronsäure. Polyoxytetramethylen-glykol-polyadipate haben sich insbesondere zur Herstellung von elastischen PU-Überzügen mit besonders hohen Festigkeitswerten bewährt.

Die Polyester-polyole besitzen vorzugsweise eine Funktionalität von 2 und ein Molekulargewicht von 500 bis 3000 und vorzugsweise von 1000 bis 2500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wir Natriummethylat, Natrium- oder Kaliumethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekül, das 2 bis 3, vorzugsweise 2 reaktive Wasserstoffatome gebunden enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischung verwendet werden. Als Startermoleküle kommen beispielsweise in Betracht: Wasser, organische Dicarbonsäuren, wie Bernsteinsäure, Adipinsäure, Phthalsäure und Terephthalsäure, Alkanolamine, wie Ethanolamin, Diethanolamin und Triethanolamin und Ammoniak. Vorzugsweise verwendet werden zwei- und/oder dreiwertige Alkohole, wie Ethandiol, Propandiol-1,2 und -1,3, Diethylenglykol, Dipropylenglykol, Butandiol-1,4 Hexandiol-1,6, Glycerin und Trimethylol-propan.

Die Polyether-polyole besitzen vorzugsweise eine Funktionalität von 2 und Molekulargewichte von 500 bis 8000, vorzugsweise 1000 bis 6000 und insbesondere 1800 bis 4000. Sie können ebenso wie die Polyester-polyole einzeln oder in Form von Mischungen verwendet werden. Ferner können sie mit den Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/ oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnen, vorwiegend linearen Kondensate.

Zur Modifikation der mechanischen Eigenschaften der Überzüge können bei der Herstellung der PU-Prepolymeren gegebenenfalls auch niedermolekulare Kettenverlängerungs- und/oder Vernetzungsmittel in einer Menge von 0 bis 100, vorzugsweise 0 bis 50 Hydroxyäquivalentprozenten, bezogen auf die Gesamtmenge an Polyolen, mitverwendet werden. Als derartige Mittel kommen polyfunktionelle, insbesondere di- und/oder trifunktionelle Verbindungen mit Molekulargewichten von 62 bis 500, vorzugsweise 62 bis ungefähr 300 in Betracht. Vorzugsweise verwendet werden beispielsweise aliphatische Diole und/oder Triole mit 2 bis 6 C-Atomen, wie z.B. Ethandiol, 1,4-Butandiol, 1,6-Hexandiol, Glycerin und Trimethylolpropan.

Zur Herstellung der Polyurethan-Prepolymeren werden das Polyol oder die Polyolmischung, vowzugsweise die di- und/oder trifunktionellen Polyester-und/oder Polyether-polyole mit Molekulargewichten von 500 bis 8000, vorzugsweise in Abwesenheit von niedermolekularen Kettenverlängerungs- oder Vernetzungsmitteln, mit dem überschüssigen organischen Polyisocyanat oder der Polyisocyanatmischung in an sich bekannter Weise in solchen Mengenverhältnissen zur Reaktion gebracht, daß die erhaltenen Polyurethan-Prepolymeren die obengenannten NCO-Gehalte besitzen.

Zur Verminderung des Viskositätsanstiegs können den PU-Prepolymeren bzw. den PU-Einkomponenten-Systemen Malonsäurediethylester, z.B. in einer Menge von 0 bis 10 Gew.%, vorzugsweise 1 bis 4 Gew.%, bezogen auf das Gewicht des PU-Prepolymeren als Zusatzstoff einverleibt werden.

Nach dem erfindungsgemäßen Verfahren werden zur Herstellung der Überzüge vorzugsweise PU-Einkomponenten-Systeme mit Wasserdampf gemischt und versprüht, die zusätzlich zu einem NCO-Gruppen enthaltendem Prepolymeren oder -gemisch mindestens einen latenten Härter, zweckmäßigerweise aus der Gruppe der Oxazolidine, Enamine und Azomethine, vorzugsweise Ketimine und/oder insbesondere Aldimine enthalten. Latente Härter der genannten Art sind bekannt und werden z.B. beschrieben in den Patent- und Offenlegungsschriften US-A-3 743 626, DE-C-24 46 438 (US-A-4 002 601), DE-B-26 32 513 (US-A-4 118 376), DE-B-25 21 841 (US-A-4 059 549), DE-B-17 19 121 (US-A-3 715 338), DE-B-21 25 247 (US-A-3 865 791 and US-A-3 941 753), DE-A-31 33 769, DE-A-33 06 373, DE-A-36 07 996 and DE-A-36 24 924.

Die latenten Härter hydrolysieren in Gegenwart von Feuchtigkeit. Die Hydrolysegeschwindigkeit kann durch den Zusatz von organischen Carbonsäuren, beispielsweise aliphatischen und vorzugsweise aromatischen Carbonsäuren oder Arylsulfonsäure als Katalysator beschleunigt werden. Beispielhaft genannt seien aliphatische Carbonsäuren, wie Ameisensäure, Essigsäure, Mono-, Di- und Trichloressigsäure, Oxalsäure, Malonsäure, Maleinsäure und Fumarsäure, aromatische Carbonsäuren, wie Benzoesäure, Mono-, Di- und Trichlorbenzoesäure, Salicylsäure und Alkylmonophthalate und Arylfulfonsäuren, wie z.B. Xylolsulfonsäure und vorzugsweise Toluolsulfonsäure oder deren Gemische.

Vorzugsweise verwendet werden Benzoesäure und Mischungen aus Toluol- und Xylolsulfonsäure.

Sofern den latente Härter enthaltenden PU-Einkomponenten-Systemen organische Carbonsäuren oder Arylsulfonsäuren einverleibt werden, finden pro Äquivalent -N = CH- bzw. -N = C< Gruppe zweckmäßigerweise 0 bis 20 mval, vorzugsweise 1 bis 5 mval Verwendung.

Beispiel 1

PU-Einkomponenten-System

Mischung aus

100 Gew.-Teilen eines NCO-Gruppen enthaltenden Prepolymeren mit einem NCO-Gehalt von 3 Gew.%, hergestellt durch Umsetzung eines Polyoxypropylen-polyoxyethylen-polyols mit einer durchschnittlichen Funktionalität von 2,3 und einer Hydroxylzahl von 30 mit 2,4'-Diphenylmethan-diisocyanat.

12,0 Gew.-Teilen eines Dialdimins, hergestellt durch Umsetzung von 1,6-Hexamethylen-diamin und Isobutyraldehyd,
6 Gew.-Teilen einer 10 gew.%igen Lösung von Benzoesäure in Ethylacetat und
3 Gew.-Teilen Xylol.

Die erhaltene Mischung besaß eine Viskosität von 400 m.Pas bei 25°C.

Der Wasserdampf wurde mit einer Temperatur von 120°C und einem Druck von 3,8 bar einer Heißdampf-Spritzpistole zugeführt, dort mit dem oben be schriebenen PU-Einkomponenten-System gemischt und in einem Spritzgang ohne Unterbrechung auf eine senkrecht stehende Oberfläche gesprüht.

Der Wasserdampfverbrauch betrug 350 1/Minute, die Austragsleistung lag bei ungefähr 500 g/Minute und die Austrittatemperatur der Überzugsmischung nach der Düse war 120°C.

Es bildete sich sofort ein klebfreier Überzug, der selbst bei einer Schichtdicke von 200 μm keine Abläufer zeigte.

Der Überzug besaß folgende mechanischen Eigenschaften:
Zugfestigkeit nach DIN 53 504 S1:  4,4 N/mm²
Bruchdehnung nach DIN 53 504 S1:  480%
Shore-Härte A nach DIN 53 505  :  70


Vergleichsbeispiel

Das PU-Einkomponenten-System nach Beispiel 1 wurde mit Xylol auf eine Viskosität von 150 m.Pas bei 25°C verdünnt und mittels einer Luftdruck-Spritzpistole auf eine senkrecht stehende Oberfläche aufgespritzt.

Durch Auftrag in 3 Spritzgängen mit Zwischenentlüftung wurde ein Überzug mit einer Schichtdicke von maximal 45 μm gebildet.

Der Überzug blieb ungefähr 1 Stunde lang klebrig und härtete danach von der Oberfläche aus in ungefähr 6 Stunden endgültig durch.

Nach 2 Tagen Alterung wurden an dem ausgehärteten Überzug folgende mechanischen Eigenschaften gemessen:
Zugfestigkeit nach DIN 53 504 S1:  4,6 N/mm²
Bruchdehnung nach DIN 53 504 S1:  420%
Shore-Härte A nach DIN 53 505  :  75


**Ansprüche**

1. Verfahren zur Herstellung von Überzügen aus Polyurethan-Einkomponenten-Systemen und Wasser, dadurch gekennzeichnet, daß man mindestens ein Polyurethan-Einkomponenten-System mit Wasserdampf mischt und versprüht.

2. Verfahren nach Anspruch 1, dadurch gekennzeichnet, daß der Wasserdampf unter einem Druck von 0,5 bis 10 bar zugeführt wird.

3. Verfahren nach Anspruch 1, dadurch gekennzeichnet, daß der Wasserdampf eine Temperatur von 100 bis 500°C besitzt.

4. Verfahren nach Anspruch 1, dadurch gekennzeichnet, daß der Wasserdampf eine Temperatur von 100 bis 250°C besitzt und unter einem Druck von 2,0 bis 5,0 bar zugeführt wird.

5. Verfahren nach Anspruch 1, dadurch gekennzeichnet, daß pro kg Polyurethan-Einkomponenten-System 0,01 bis 1,0 kg Wasserdampf verbraucht werden.

6. Verfahren nach Anspruch 1, dadurch gekennzeichnet, daß das Polyurethan-Einkomponenten-System NCO-Gruppen gebunden enthaltende Prepolymere enthält.

7. Verfahren nach Anspruch 1, dadurch gekennzeichnet, daß die im Polyurethan-Einkomponenten-Systeme enthaltene NCO-Gruppen gebunden enthaltende Prepolymere einen NCO-Gehalt von 1 bis 10 Gew.% besitzen und hergestellt werden durch Umsetzung von
a) organischen, vorzugsweise aliphatischen, cycloaliphatischen und/oder aromatischen Polyisocyanaten mit
b) höhermolekularen Polyolen, vorzugsweise di- und/oder trifunktionellen Polyester- und/oder Polyether-polyolen mit Molekulargewichten von 500 bis 8000.

8. Verfahren nach Anspruch 1, dadurch gekennzeichnet, daß die Polyurethan-Einkomponenten-Systeme enthalten:
ein NCO-Gruppen gebunden enthaltendes Prepolymer und
einen latenten Härter.

9. Verfahren nach Anspruch 1, dadurch gekennzeichnet, daß die Polyurethan-Einkomponenten-Systeme enthalten:
ein Polyurethan-Prepolymer mit einem NCO-Gehalt von 1 bis 10 Gew.%, hergestellt durch Umsetzung von organischen Polyisocyanaten und höhermolekularen Polyolen, und mindestens ein Ketimin und/oder Aldimin als latenten Härter.

10. Verfahren nach Anspruch 1, dadurch gekennzeichnet, daß die Polyurethan-Einkomponenten-Systeme enthalten:
ein Polyurethan-Prepolymer mit einem NCO-Gehalt von 1 bis 10 Gew.% und ein Ketimin und/oder Aldimin als latenten Härter in solchen Mengen, daß pro NCO-Gruppe des Polyurethan-Prepolymeren 0,2 bis 1,3 Äquivalente -N=C< und/oder -N=CH-Gruppen vorliegen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | BE-A- 656 488 (DU PONT DE NEMOURS AND CO.) <br> * Ansprüche 1,2; Seite 3, Zeilen 1-18; Seite 3, Zeile 27 - Seite 4, Zeile 13 * <br> --- | 1,3,6 | C 08 G 18/10 <br> C 08 G 18/08 <br> C 08 G 18/32 <br> C 09 D 3/72 <br> B 05 D 1/02 |
| A | US-A-3 567 692 (G.A. HAGGIS et al.) <br> * Ansprüche 1,6-9; Spalte 2, Zeile 35 - Spalte 3, Zeile 6; Spalte 4, Zeilen 16-37 * <br> --- | 8-10 | |
| D,A | DE-A-3 306 373 (BASF) <br> * Ansprüche 1-3,5 * <br> --- | 8-10 | |
| A | DE-A-2 105 072 (K. KLAUS) <br> * Ansprüche 1,2 * <br> ----- | 1 | |

RECHERCHIERTE SACHGEBIETE (Int. Cl.4)

C 08 G
C 09 D
B 05 D

Der vorliegende Recherchenbericht wurde für alle Patentansprüche erstellt

| Recherchenort | Abschlußdatum der Recherche | Prüfer |
|---|---|---|
| DEN HAAG | 30-08-1988 | VAN PUYMBROECK M.A. |